# EUROPEAN PATENT APPLICATION

(11) **EP 4 538 216 A1**
(43) Date of publication of application: **16.04.2025**
(21) Application number: 23819000.3
(22) Date of filing: 31.05.2023
(51) Int. Cl.: B66C 13/06, B60L 53/80

(54) **TRANSFER DEVICE AND BATTERY SWAPPING STATION**

(30) Priority: 06.06.2022 CN 202221387544 U
(71) Applicant: Contemporary Amperex Technology (Hong Kong) Limited, Central, Hong Kong (HK)
(72) Inventor: CHEN, Disong, Ningde, Fujian 352100 (CN); QUE, Shibiao, Ningde, Fujian 352100 (CN); DU, Xiaopeng, Ningde, Fujian 352100 (CN); CHEN, Dewei, Ningde, Fujian 352100 (CN)
(74) Representative: Ran, Handong
(86) International application number: PCT/CN2023/097477
(87) International publication number: WO 2023/236835

(57) **Abstract**

A transfer device and a battery swapping station. The transfer device is used for transferring batteries, and comprises a base (10), a driving mechanism (30) and a lifting appliance (20). The base (10) is provided with a first matching portion (101). The driving mechanism (30) is arranged on the base (10). The lifting appliance (20) is connected to the driving mechanism (30); the driving mechanism (30) is used for driving the lifting appliance (20) to ascend and descend; the lifting appliance (20) is provided with a second matching portion (201); the second matching portion (201) and the first matching portion (101) are arranged opposite each other in a lifting direction of the lifting appliance (20); and the first matching portion (101) and the second matching portion (201) are configured to match each other when the lifting appliance (20) reaches a preset position, so as to restrict the movement of the lifting appliance (20) in a direction perpendicular to the lifting direction.

## Description

### CROSS-REFERENCE TO RELATED APPLICATIONS

This application claims priority to Chinese Patent Application No. 202221387544.4, filed on June 06, 2022 and entitled "TRANSFER APPARATUS AND BATTERY SWAP STATION", which is incorporated herein by reference in its entirety.

### TECHNICAL FIELD

This application belongs to the technical field of battery devices, and in particular, to a transfer apparatus and a battery swap station.

### BACKGROUND

With development of new energy technologies, batteries are widely used in electrical apparatuses, such as mobile phones, notebook computers, battery cars, electric cars, electric planes, electric ships, electric toy cars, electric toy ships, electric toy planes and electric tools.

Limited by battery capacity, the electrical apparatuses need to be charged frequently, and charging is time-consuming, which affects the user experience.

### SUMMARY

An implementation of this application provides a transfer apparatus and a battery swap station, facilitating accurate transfer of batteries and improving the replacement efficiency.

A first aspect of implementations of this application provides a transfer apparatus of a battery swap station. The transfer apparatus is used for transferring batteries, and includes a foundation, a drive mechanism and a lifting member. The foundation is provided with a first matching portion. The drive mechanism is disposed on the foundation. The lifting member is connected to the drive mechanism. The drive mechanism is used for driving the lifting member to ascend and descend. The lifting member is provided with a second matching portion, the second matching portion and the first matching portion are disposed opposite each other in an ascending and descending direction of the lifting member, and the first matching portion and the second matching portion are configured to match together when the lifting member reaches a predetermined position to limit movement of the lifting member in a direction perpendicular to the ascending and descending direction.

With adoption of the above structure, by limiting the relative movement of the first matching portion and the second matching portion in a direction perpendicular to the ascending and descending direction, shaking generated when the lifting member transfers the batteries can be significantly reduced, so that the first matching portion and the second matching portion overlap in the ascending and descending direction, the ascending and descending precision of the batteries is improved, and thus the mounting precision is improved, and the mounting efficiency is improved. Meanwhile, by reducing the shaking, collision in the transfer process of the batteries can also be reduced, and the safety of the transfer work can be improved.

In some optional implementations of this application, one of the first matching portion and the second matching portion includes a guide post and the other includes a sleeve; and the guide post is configured to insert into the sleeve when the lifting member reaches a predetermined position.

With adoption of the above structure, by providing the guide post and the sleeve, the relative movement of the first matching portion and the second matching portion in the direction perpendicular to the ascending and descending direction is effectively limited, the limiting method is simple and effective, there is no need to introduce an additional fixing step, the limiting step can be completed synchronously with the step of ascending the batteries, and the transfer efficiency is improved.

In some optional implementations of this application, the sleeve includes a guide hole, and the guide hole includes a limiting section; and the guide post includes a main body, and the limiting section is used for accommodating at least a portion of the main body, so as to limit the main body.

With adoption of the above structure, by providing the limiting section, after the sleeve and the guide post are coupled, an interval between at least a portion of the sleeve and the guide post is small, the guide post is convenient to restrict, and the limiting efficiency and effect are improved.

In some optional implementations of this application, a difference between an aperture of the limiting section and a diameter of the main body is from 0.1 mm to 10 mm.

With adoption of the above structure, by limiting the range of dimensions at the limiting section and the guide post, the limiting section and the guide post can be in clearance fit, i.e., without affecting the access of the guide post to the limiting section, the constraint of the sleeve on the guide post is improved, and the limiting effect is improved.

In some optional implementations of this application, the guide hole further includes a guide section, the guide section is located on a side of the limiting section facing toward the lifting member, and an aperture of the guide section is gradually increased in a direction back away from the limiting section.

With adoption of the above structure, by providing the guide section, the guide post can be guided into the guide hole, and the guide effect is improved.

In some optional implementations of this application, the guide hole further includes an accommodating section, the accommodating section is located on a side of the limiting section back away from the guide post, and an aperture of the accommodating section is greater than an aperture of the limiting section.

With adoption of the above structure, by providing the accommodating section, after a portion of the guide post is restricted by the limiting section, additional abrasion caused by other portions of the guide post abutting against the guide hole is reduced.

In some optional implementations of this application, a conical head is disposed on a side of the main body facing toward the sleeve.

With adoption of the above structure, by providing the conical head, the volume of one side of the main body facing toward the sleeve can be reduced, the main body conveniently enters the guide hole, and the guide efficiency is improved.

In some optional implementations of this application, the guide post further includes a base, one end of the main body is connected to the base, a first buffer member is disposed on a side of the base away from the main body, and a side of the first buffer member away from the base is detachable from the lifting member.

With adoption of the above structure, by providing the first buffer member, the base is connected to the first matching portion or the second matching portion through the first buffer member, so that there exists a buffer between the base and the first matching portion or the second matching portion, thereby reducing the impact of the matching between the base and the second matching portion, and protecting the guide post and the second matching portion.

In some optional implementations of this application, a plurality of long round holes are provided in the first buffer member, and the first buffer member is bolted to the lifting member through the long round holes.

With adoption of the above structure, the first buffer member is connected to the lifting member by providing the long round holes, so that the mounting position of the guide post is adjusted by changing the relative position of bolts to the centers of the long round holes.

In some optional implementations of this application, the guide post further includes limiting member disposed in a circumferential direction of the main body, and the limiting member can enter the guide section and abut against the limiting section.

With adoption of the above structure, by providing the limiting member, the distance at which the guide post enters the sleeve can be limited, the guide post is prevented from entering too deeply and damaging the sleeve, the impact when the guide post and the sleeve match is reduced, and the guide post and the sleeve are protected.

In some optional implementations of this application, at least two first buffer members are provided, and length directions of the long round holes in any two first buffer members are provided at an angle.

With adoption of the above structure, by providing the plurality of first buffer members, multi-directional adjustment of the guide post can be achieved.

In some optional implementations of this application, the limiting member includes a reinforcing member disposed in the circumferential direction of the main body and connected to the base, and a sum of a length of the reinforcing member and the diameter of the main body is greater than a diameter of the limiting section in a plane perpendicular to an axial direction of the guide post.

With adoption of the above structure, by providing the reinforcing members, the connection strength of the main body and the base can be effectively improved.

In some optional implementations of this application, the lifting member is provided with a first sensor, and the first sensor is used for sensing a relative distance between the lifting member and each battery.

With adoption of the above structure, by providing the first sensor, the relative distance between the lifting member and each battery can be more accurate.

In some optional implementations of this application, the foundation is further provided with a second sensor, and the second sensor can sense a distance between the foundation and the guide post.

With adoption of the above structure, by providing the second sensor, the relative distance between the foundation and the guide post can be more accurate, and the guide post can conveniently enter the sleeve.

In some optional implementations of this application, a second buffer member is further disposed at a bottom of the guide hole.

With adoption of the above structure, by providing the second buffer member, the buffer capacity between the guide post and the sleeve can be strengthened, and the guide post is prevented from directly abutting against the bottom of the sleeve and causing damage to the sleeve.

A second aspect of implementations of this application provides a battery swap station, including a parking platform, a battery compartment and the above transfer apparatus. The parking platform is used for supporting an electrical apparatus. The battery compartment is used for accommodating batteries and charging the batteries. The transfer apparatus is configured to move between the battery compartment and the parking platform.

Compared with the related art, in the transfer apparatus and the battery swap station of the implementations of this application, by limiting the relative movement of the first matching portion and the second matching portion in the direction perpendicular to the ascending and descending direction, shaking generated when the lifting member of the transfer apparatus transfers the batteries can be significantly reduced, so that the first matching portion and the second matching portion overlap in the ascending and descending direction, the ascending and descending precision of the batteries is improved, and thus the mounting precision is improved, and the mounting efficiency is improved. Meanwhile, by reducing the shaking, collision in the transfer process of the batteries can also be reduced, and the safety of the transfer work can be improved.

### BRIEF DESCRIPTION OF DRAWINGS

To describe the technical solutions of implementations of this application more clearly, the following outlines the drawings used in the implementations of this application. Evidently, the drawings outlined below are merely a part of implementations of this application. A person of ordinary skill in the art may derive other drawings from the outlined drawings without making any creative efforts.
FIG. 1 is a schematic structural diagram of a battery swap station according to some embodiments of this application.
FIG. 2 is a schematic structural diagram of an interior of a battery swap station according to some embodiments of this application.
FIG. 3 is a schematic structural diagram of a vehicle according to some embodiments of this application.
FIG. 4 is a schematic structural diagram of a transfer apparatus according to some embodiments of this application.
FIG. 5 is a schematic structural diagram of an implementation of FIG. 4 as viewed from another viewing angle.
FIG. 6 is a schematic structural diagram of a sleeve and a guide post according to some embodiments of this application.
FIG. 7 is a schematic structural diagram of interiors of a sleeve and a guide post according to some embodiments of this application.
FIG. 8 is a schematic structural diagram of a guide post according to some embodiments of this application.
FIG. 9 is a schematic structural diagram of a first buffer member according to some embodiments of this application.

### List of reference numerals:

1000, Vehicle; 100, Battery; 200, Controller; 300, Motor; 400, Parking platform; 500, Transfer apparatus; 501, Track; 600, Battery compartment;
10, Foundation; 20, Lifting member; 30, Drive mechanism; 101, First matching portion; 201, Second matching portion; 1, Guide post; 11, Main body; 12, Conical head; 13, Limiting member; 14, Base; 15, First buffer member; 151, Long round hole; 2, Sleeve; 21, Guide hole; 211, Limiting section; 212, Guide section; and 213, Accommodating section.

### DETAILED DESCRIPTION OF EMBODIMENTS

Implementations of the technical solutions of this application will be described in detail below in conjunction with the accompanying drawings. The following implementations are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific implementations but not to limit this application. The terms "include" and "contain" and any variations thereof used in the specification, claims, and brief description of the accompanying drawings of this application are intended as non-exclusive inclusion.

In the description of the implementations of this application, the technical terms "first" and "second", etc. are merely intended to distinguish between different items but not intended to indicate or imply relative importance or implicitly specify the number of the indicated technical features, specific order, or order of precedence.

Reference to "implementation" herein implies that particular features, structures, or characteristics described in conjunction with an implementation may be included in at least one implementation of this application. The presence of the phrase at various places in the specification does not necessarily refer to the same implementation, nor is it a separate or alternative embodiment that is mutually exclusive of other implementations. It is understood by those skilled in the art, both explicitly and implicitly, that the implementations described herein may be combined with other implementations.

In the description of the implementations of this application, the term "and/or" merely indicates a relationship between related items, and represents three possible relationships. For example, A and/or B may represent the following three circumstances: A alone, both A and B, and B alone. In addition, the character "/" herein generally indicates that the related items before and after are in an "or" relationship.

In the description of the implementations of this application, the term "a plurality of" means two or more (including two). Similarly, "a plurality of groups" means two or more groups (including two groups), and "a plurality of pieces" means two or more pieces (including two pieces).

In the description of the implementations of this application, a direction or a positional relationship indicated by the technical terms, such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the accompanying drawings, and is merely intended for ease or brevity of description of the implementations of this application, but not intended to indicate or imply that the indicated apparatus or component is necessarily located in the specified direction or constructed or operated in the specified direction. Therefore, such terms are not to be understood as a limitation on the implementations of this application.

In the description of the implementations of this application, unless otherwise explicitly provided and limited, the technical terms, such as "mount," "connect," "couple," and "fix" should be understood broadly, which, for example, may refer to a fixed connection, a detachable connection, or an integral connection; which may refer to a mechanical connection or an electrical connection; which may refer to a direct connection or an indirect connection via an intermediate medium; and which may also refer to a communication between the insides of two elements, or an interaction relationship between two elements. For those of ordinary skill in the art, the specific meaning of the above terms in the implementations of this application may be understood according to specific conditions.

At present, with the continuous development of battery technologies, the application scenarios of batteries are also increasing, and how to quickly replenish the electrical energy of the batteries has become one of the factors limiting the promotion of the batteries. According to the principle of storing energy in the batteries themselves, the batteries need to be replenished with the electric energy periodically, and the batteries are replenished with the electric energy in the form of charging for a longer period of time. Therefore, by directly replacing depleted batteries with fully charged batteries for electrical apparatuses, the efficiency of replenishing the electrical energy for the electrical apparatuses can be effectively improved.

However, the applicant has found that the direct replacement manner of the batteries introduces the steps of battery disassembly, mounting and transfer. Due to the large self-weight of the batteries, it is difficult to realize the steps of disassembly, mounting and transfer, and in particular, in the process of using a lifting member to transfer the batteries, the batteries shake in the direction perpendicular to the ascending and descending direction by a larger amplitude, and the batteries are unable to accurately align with the mounting position on the electrical apparatus, which reduces the mounting efficiency, and also reduces the mounting precision, and in turn reduces the replacement efficiency. More obviously, the above-mentioned shaking also makes the batteries to easily knock against other components in a battery swap station, which causes damage to the batteries and affects the safety of the batteries.

Based on the above considerations, in order to improve the replacement efficiency of the batteries, the inventor of this application, after in-depth research, designs a transfer apparatus and a battery swap station. According to the transfer apparatus, a first matching portion and a second matching portion which are used for matching mutually are disposed on a lifting member and a foundation respectively, so that the relative movement of the lifting member and the foundation in the process of transferring the batteries can be limited, the battery shaking in the transferring process is effectively reduced, the safety of replacement is improved, the alignment of the batteries with the mounting position on the electrical apparatus is facilitated, and the replacement efficiency is improved.

A battery mentioned in an embodiment of this application means a unitary physical module that includes one or more battery cells to provide a higher voltage and a higher capacity. For example, the battery may include a battery module, a battery pack, or the like.

The transfer apparatus and the battery swap station used for replacing the batteries according to embodiments of this application may be used for a vehicle. The vehicle may be an oil-fueled vehicle, a natural gas vehicle, or a new energy vehicle. The new energy vehicle may be a battery electric vehicle, a hybrid electric vehicle, a range-extended electric vehicle, or the like. Exemplarily, the electrical apparatus may be a heavy-duty truck.

For ease of description in the following embodiments, a vehicle is used as an example of the electrical apparatus according to an embodiment of this application.

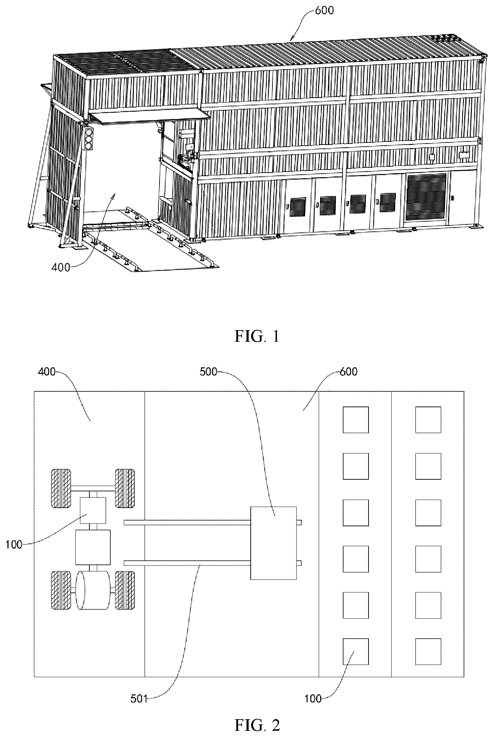

As shown in FIG. 1 and FIG. 2, FIG. 1 is a schematic structural diagram of a battery swap station according to some embodiments of this application, and FIG. 2 is a schematic structural diagram of an interior of a battery swap station according to some embodiments of this application. The battery swap station of an embodiment of this application includes a parking platform 400, a battery compartment 600 and a transfer apparatus 500. The parking platform 400 is used for supporting the electrical apparatus. The battery compartment 600 is used for storing the batteries 100 and charging the batteries 100. The transfer apparatus 500 is configured to drive the batteries 100 to move between the parking platform 400 and the battery compartment 600, and can be used for replacing the batteries 100 of the electrical apparatus.

Exemplarily, the battery swap station of an embodiment of this application may replace one battery 100 in accordance with the following steps: when the electrical apparatus enters the parking platform 400, the transfer apparatus 500 may move to the electrical apparatus and remove the battery 100 with exhausted electrical energy from the electrical apparatus, and the removed battery is fixed with the transfer apparatus 500; the transfer apparatus 500 transfers the removed to-be-charged battery 100 to the battery compartment 600 and receives the fully charged battery 100 stored in the battery compartment 600; the transfer apparatus 500 moves with the fully charged battery 100 to the electrical apparatus and mounts the fully charged battery 100 to the electrical apparatus; and the electrical apparatus leaves the parking platform 400.

Optionally, the battery swap station further includes tracks 501 on which the transfer apparatus 500 is movably disposed. The tracks 501 are used for guiding the transfer apparatus 500 to move, so that the transfer apparatus 500 can move between the parking platform 400 and the battery compartment 600. Exemplarily, one ends of the tracks 501 extend into the battery compartment 600 and the other ends extend into the parking platform 400. The tracks 501 may be disposed at the top of the battery compartment 600, and the transfer apparatus 500 travels along the tracks 501 at the top of the battery compartment 600, so that the occupied area of the battery compartment 600 can be reduced.

Optionally, a stacker may be additionally provided in the battery compartment 600, and the stacker is used for transferring the to-be-charged batteries 100 removed by the transfer apparatus 500 to charging places of the battery compartment 600 for charging, and placing the fully charged batteries 100 stored in the battery compartment 600 onto the transfer apparatus 500. Or, the transfer apparatus 500 directly transfers the to-be-charged batteries 100 to the charging places after removing the to-be-charged batteries 100 from the electrical apparatus, and moreover, the transfer apparatus 500 may also directly transfer the fully charged batteries 100 on the charging places to the electrical apparatus.

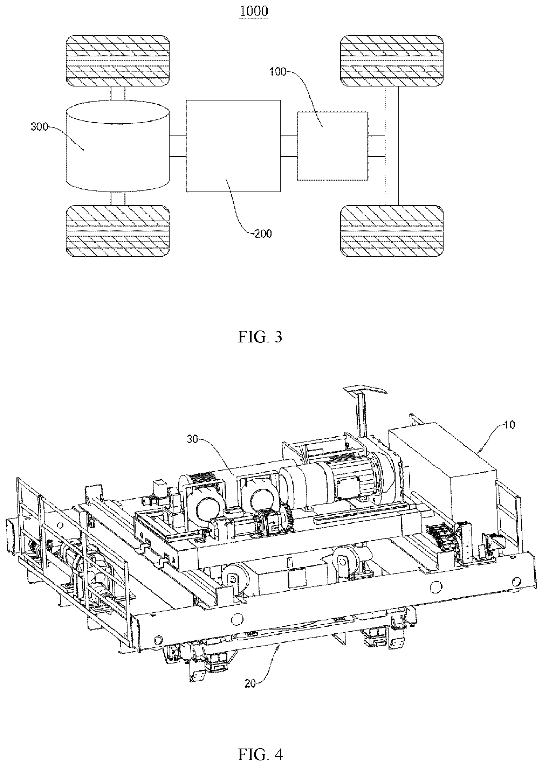

Referring to FIG. 3, FIG. 3 is a schematic structural diagram of a vehicle according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be used for supplying power to the vehicle 1000. For example, the battery 100 may serve as an operating power supply of the vehicle 1000. The vehicle 1000 may further include a controller 200 and a motor 300. The controller 200 is used for controlling the battery 100 to supply power to the motor 300, for example, to meet the operating power requirements of the vehicle 1000 in start, navigation and running.

In some embodiments of this application, the battery 100 serves not only as an operating power supply of the vehicle 1000, but may also serve as a drive power supply of the vehicle 1000 to provide a driving power supply for the vehicle 1000 in place of or partly in place of fuel oil or natural gas.

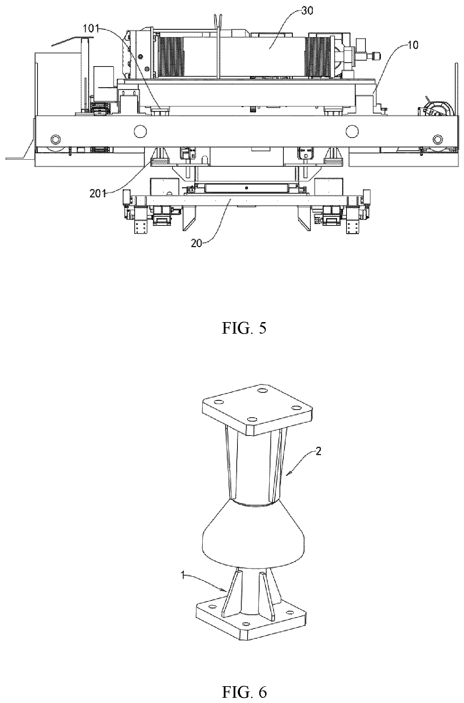

As shown in FIG. 4 and FIG. 5, FIG. 4 is a schematic structural diagram of a transfer apparatus according to some embodiments of this application, and FIG. 5 is a schematic structural diagram of an implementation of FIG. 4 as viewed from another viewing angle. In some implementations of this application, a transfer apparatus of a battery swap station is provided, used for transferring batteries, and includes a foundation 10, a drive mechanism 30 and a lifting member 20. The foundation 10 is provided with a first matching portion 101. The drive mechanism 30 is disposed on the foundation 10. The lifting member 20 is connected to the drive mechanism 30. The drive mechanism 30 is used for driving the lifting member 20 to ascend and descend. The lifting member 20 is provided with a second matching portion 201, the second matching portion 201 and the first matching portion 101 are disposed opposite each other in an ascending and descending direction of the lifting member 20, and the first matching portion 101 and the second matching portion 201 are configured to match together when the lifting member 20 reaches a predetermined position to limit movement of the lifting member 20 in a direction perpendicular to the ascending and descending direction.

The foundation 10 is used for providing a load-bearing platform for the transfer apparatus 500, which facilitates the attachment of the transfer apparatus 500 to components that move in the ascending and descending direction. Exemplarily, the foundation 10 may be a truss car or a moving platform, and can move the transfer apparatus 500 in a direction perpendicular to the ascending and descending direction.

The drive structure is used for moving the lifting member 20 in the ascending and descending direction. The drive structure may adopt a motor having a sling, the lifting member 20 is connected to the sling, and the motor rotates to wind or release the sling, so as to move the lifting member 20 in the ascending and descending direction. Exemplarily, the drive structure may utilize a reel or winch.

The lifting member 20 is used for being in detachable connection with the batteries, and may utilize a mechanical arm, a fixed rod, etc.

The first matching portion 101 and the second matching portion 201 are used for connecting the lifting member 20 to the foundation 10. Exemplarily, the first matching portion 101 and the second matching portion 201 are configured as a snap-fit connection, a threaded connection, and the like. Exemplarily, one of the first matching portion 101 and the second matching portion 201 may be configured as a groove and the other may be configured as a boss, with the groove and the boss being clamped together. Exemplarily, one of the first matching portion 101 and the second matching portion 201 may be configured as a screw and the other may be configured as a nut, and the bolt is in threaded connection with the nut.

By limiting the relative movement of the first matching portion 101 and the second matching portion 201 in a direction perpendicular to the ascending and descending direction, shaking generated when the lifting member 20 transfers the batteries can be significantly reduced, so that the first matching portion 101 and the second matching portion 201 overlap in the ascending and descending direction, the ascending and descending precision of the batteries is improved, and thus the mounting precision is improved, and the mounting efficiency is improved. Meanwhile, by reducing the shaking, collision in the transfer process of the batteries can also be reduced, and the safety of the transfer work can be improved.

Optionally, the first matching portion 101 is disposed on the lifting member 20 and the second matching portion 201 is disposed on the foundation 10. Optionally, the second matching portion 201 is disposed on the lifting member 20 and the first matching portion 101 is disposed on the foundation 10. Optionally, the predetermined position may also be a position in which the lifting member 20 is located when the transfer apparatus moves in the direction perpendicular to the ascending and descending direction.

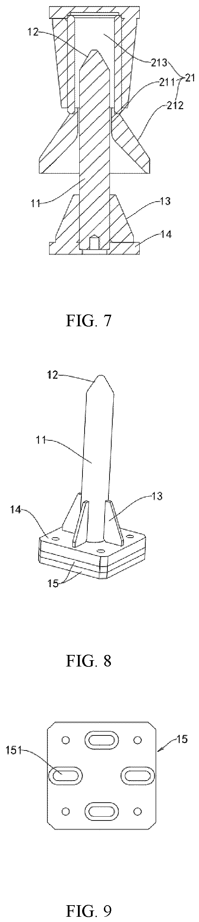

As shown in FIG. 5 to FIG. 7, FIG. 6 is a schematic structural diagram of a sleeve 2 and a guide post 1 according to some embodiments of this application, and FIG. 7 is a schematic structural diagram of interiors of a sleeve 2 and a guide post 1 according to some embodiments of this application. In some implementations of this application, one of the first matching portion 101 and the second matching portion 201 includes a guide post 1 and the other includes a sleeve 2; and the guide post 1 is configured to be inserted into the sleeve 2 when the lifting member 20 reaches the predetermined position.

By providing the guide post 1 and the sleeve 2, the relative movement of the first matching portion 101 and the second matching portion 201 in the direction perpendicular to the ascending and descending direction is effectively limited, the limiting method is simple and effective, there is no need to introduce an additional fixing step, the limiting step can be completed synchronously with the step of ascending the batteries, and the transfer efficiency is improved.

Optionally, in a direction perpendicular to an axial direction of the guide post 1, the cross section of the guide post 1 may be circular or square, etc. Optionally, in a direction perpendicular to an axial direction of the sleeve 2, the cross section of the sleeve 2 may be circular or square, etc.

Optionally, after the guide post 1 enters the sleeve 2, the inner wall of the guide post 1 may abut against the inner wall of the sleeve 2.

As shown in FIG. 7, in some implementations of this application, the sleeve 2 includes a guide hole 21, and the guide hole 21 includes a limiting section 211; and the guide post 1 includes a main body 11, and the limiting section 211 is used for accommodating at least a portion of the main body 11, so as to limit the main body 11.

The guide hole 21 is used for accommodating the guide post 1, and the limiting section 211 is a portion within the guide hole 21 for limiting the main body 11. Exemplarily, the limiting section 211 is a portion of the hole section within the guide hole 21 for abutting against a side wall of the main body 11.

By providing the limiting section 211, after the sleeve 2 and the guide post 1 are coupled, an interval between at least a portion of the sleeve 2 and the guide post 1 is small, the guide post 1 is convenient to restrict, and the limiting efficiency and effect are improved.

Optionally, the limiting section 211 is formed as a projection of the inner wall of the guide hole 21 in the direction perpendicular to the axial direction of the guide hole 21. Optionally, the limiting section 211 may be integrally molded with the guide hole 21, or may be welded or adhesively connected with the guide hole 21. Optionally, in the direction perpendicular to the axial direction of the sleeve 2, the cross section of the sleeve 2 may be circular or square.

As shown in FIG. 7, in some implementations of this application, a difference between an aperture of the limiting section 211 and a diameter of the main body 11 is from 0.1 mm to 10 mm. By restricting the width of the limiting section 211 and the width of the guide post 1, without affecting the access of the guide post 1 to the limiting section 211, the constraint of the sleeve 2 on the guide post 1 is improved, and the limiting effect is improved.

Optionally, the difference between the aperture of the limiting section 211 and the diameter of the main body 11 is from 4 mm to 6 mm.

As shown in FIG. 7, in some implementations of this application, the guide hole 21 further includes a guide section 212, the guide section 212 is located on a side of the limiting section 211 facing toward the lifting member 20, and an aperture of the guide section 212 is gradually increased in a direction back away from the limiting section 211. By providing the guide section 212, the guide post 1 can be guided into the guide hole 21 to improve the guiding effect.

Optionally, the guide section 212 may be a flared opening extending from an opening of the guide hole 21 towards the guide post 1. Optionally, the guide section 212 may be integrally molded with the guide hole 21 or may be welded or adhesively connected with the guide hole 21.

As shown in FIG. 7, in some implementations of this application, the guide hole 21 further includes an accommodating section 213, the accommodating section 213 is located on a side of the limiting section 211 back away from the lifting member 20, and an aperture of the accommodating section 213 is greater than an aperture of the limiting section 211. By providing the accommodating section 213, after a portion of the guide post 1 is restricted by the limiting section 211, additional abrasion caused by other portions of the guide post 1 abutting against the guide hole 21 is reduced.

As shown in FIG. 7, in some implementations of this application, a conical head 12 is disposed on a side of the main body 11 facing toward the sleeve 2. By providing the conical head 12, the volume of one side of the main body 11 facing toward the sleeve 2 can be reduced, the main body 11 conveniently enters the guide hole 21, and the guide efficiency is improved.

As shown in FIG. 7 and FIG. 8, FIG. 7 is a schematic structural diagram of a guide post 1 according to some embodiments of this application. In some implementations of this application, the guide post 1 further includes a base 14, one end of the main body 11 is connected to the base 14, a first buffer member 15 is disposed on a side of the base 14 away from the main body 11, and a side of the first buffer member 15 away from the base 14 is detachable from the lifting member 20.

The base 14 is used for strengthening the contact area of the guide post 1 with the mounting position and to enhance the connection strength. Exemplarily, in the direction perpendicular to the axial direction of the guide post 1, a cross-sectional area of the base 14 is larger than a cross-sectional area of the main body 11.

The first buffer member 15 is used for strengthening the buffering capacity between the guide post 1 and the mounting position, and reduces damage caused by direct rigid confrontation of the guide post 1 with the mounting position.

By providing the first buffer member 15, the base 14 is connected to the first matching portion 101 or the second matching portion 201 through the first buffer member 15, so that there exists a buffer between the base 14 and the first matching portion 101 or the second matching portion 201.

Optionally, in the direction perpendicular to the axial direction of the guide post 1, the cross section of the base 14 may be circular or square. Optionally, in the direction perpendicular to the axial direction of the guide post 1, the cross section of the first buffer member 15 may be circular or square.

As shown in FIG. 7 to FIG. 9, FIG. 9 is a schematic structural diagram of a first buffer member 15 according to some embodiments of this application. In some implementations of this application, the first buffer member 15 is provided with a plurality of long round holes 151, and the first buffer member 15 is in bolt connection with the lifting member 20 through the long round holes 151. The first buffer member 15 is bolted to the lifting member 20 by providing the long round holes 151, so that the mounting position of the guide post 1 is adjusted by changing the relative position of bolts to the long round holes 151.

As shown in FIG. 7 to FIG. 9, in some implementations of this application, the guide post 1 further includes limiting members 13 disposed in a circumferential direction of the main body 11, and the limiting members 13 can enter the guide section 212 and abut against the limiting section 211.

The limiting members 13 are used for abutting against the limiting section 211 when the lifting member 20 reaches the predetermined position and still continues to move, preventing the guide post 1 from continuing to enter the sleeve 2. Exemplarily, the limiting members 13 may be disposed on the side of the main body 11 away from the sleeve 2, and may be limiting sheet metals, limiting blocks, or the like.

By providing the limiting members 13, the distance at which the guide post 1 enters the sleeve 2 can be limited, and the guide post 1 is prevented from entering too deeply and damaging the sleeve 2.

As shown in FIG. 9, in some implementations of this application, at least two first buffer members 15 are provided, and length directions of the long round holes 151 in any two first buffer members 15 are provided at an angle. By providing the plurality of first buffer members 15, multi-directional adjustment of the guide post 1 can be achieved.

Optionally, two first buffer members 15 are provided, and an included angle between length directions of the long round holes 151 in the two first buffer members 15 is 90°.

As shown in FIG. 7 to FIG. 9, in some implementations of this application, the limiting members 13 include reinforcing members disposed in the circumferential direction of the main body 11 and connected to the base 14, and a sum of lengths of the reinforcing members and the diameter of the main body 11 is greater than a diameter of the limiting section 211 in a plane perpendicular to the axial direction of the guide post 1. By providing the limiting members 13 with the reinforcing members, the connection strength of the main body 11 and the base 14 can be effectively improved.

In some implementations of this application, the lifting member 20 is provided with a first sensor, and the first sensor is used for sensing a relative distance between the lifting member 20 and each battery. By providing the first sensor, the relative distance between the lifting member 20 and each battery is more accurate.

Optionally, the first sensor is a distance sensor, such as a laser sensor.

In some implementations of this application, the foundation 10 is further provided with a second sensor, and the second sensor can sense a distance between the foundation 10 and the guide post 1. By providing the second sensor, the relative distance between the foundation 10 and the guide post 1 is more accurate, and the guide post 1 can conveniently enter the sleeve 2.

Optionally, the second sensor is a distance sensor, such as a laser sensor.

In some implementations of this application, a second buffer member is further disposed at the bottom of the guide hole 21. By providing the second buffer member, the buffer capacity between the guide post 1 and the sleeve 2 can be strengthened, and the guide post 1 is prevented from directly abutting against the bottom of the sleeve 2 and causing damage to the sleeve 2.

Optionally, the second buffer member may adopt a gasket made of a flexible material, such as rubber or sponge gaskets.

In some implementations of this application, a battery swap station is provided, and includes a parking platform, a battery compartment and the above transfer apparatus. The parking platform is used for supporting an electrical apparatus. The battery compartment is used for accommodating batteries and charging the batteries. The transfer apparatus is configured to move between the battery compartment and the parking platform.

Compared with the related art, in the transfer apparatus and the battery swap station of the implementations of this application, by limiting the relative movement of the first matching portion 101 and the second matching portion 201 in the direction perpendicular to the ascending and descending direction, shaking generated when the lifting member 20 transfers the batteries can be significantly reduced, collision in the transfer process of the batteries can be reduced, and the safety of the transfer work can be improved.

In some implementations of this application, the transfer apparatus of the battery swap station is provided, used for transferring the batteries, and includes the foundation 10, the drive mechanism 30 and the lifting member 20. The foundation 10 is provided with the sleeve 2, the lifting member 20 is provided with the guide post 1, the lifting member 20 is connected to the drive mechanism 30, and the drive mechanism 30 is used for driving the lifting member 20 to ascend and descend. The guide post 1 and the sleeve 2 are disposed opposite each other in the ascending and descending direction of the lifting member 20. The guide post 1 is configured to be inserted into the sleeve 2 when the lifting member 20 reaches the predetermined position to limit movement of the lifting member 20 in the direction perpendicular to the ascending and descending direction. The sleeve 2 includes the guide hole 21, and the guide hole 21 includes the limiting section 211. The guide post 1 includes the main body 11, and the limiting section 211 is used for accommodating at least a portion of the main body 11 to limit the main body 11. The difference between the aperture of the limiting section 211 and the diameter of the main body 11 is from 4 mm to 6 mm. The guide hole 21 further includes the guide section 212, the guide section 212 is located on the side of the limiting section 211 facing toward the lifting member 20, and the aperture of the guide section 212 is gradually increased in the direction back away from the limiting section 211. The guide hole 21 further includes the accommodating section 213, the accommodating section 213 is located on the side of the limiting section 211 back away from the lifting member 20, and the aperture of the accommodating section 213 is greater than the aperture of the limiting section 211. The conical head 12 is disposed on the side of the main body 11 facing toward the sleeve 2. The guide post 1 further includes the base 14, one end of the main body 11 is connected to the base 14, the first buffer member 15 is disposed on the side of the base 14 away from the main body 11, and one side of the first buffer member 15 away from the main body 11 is detachable from the lifting member 20. The first buffer member 15 is provided with the plurality of long round holes 151, and the first buffer member 15 is bolted to the lifting member 20 through the long round holes 151. The guide post 1 further includes the limiting members 13 disposed in the circumferential direction of the main body 11, and the limiting members 13 can enter the guide section 212 and abut against the limiting section 211.

Finally, it is hereby noted that the foregoing implementations are merely intended to describe the technical solutions of this application but not to limit this application. Although this application has been described in detail with reference to the foregoing implementations, a person of ordinary skill in the art should understand that modifications may still be made to the technical solutions described in the foregoing implementations, or equivalent replacements may still be made to some or all technical features in the technical solutions. Such modifications and replacements do not make the essence of the corresponding technical solutions depart from the scope of the technical solutions of the implementations of this application, and shall be covered by the scope of the claims and the specification of this application. In particular, as long as there is no structural conflict, the technical features mentioned in the various implementations can be combined in any way. This application is not limited to the particular implementations disclosed herein, but includes all technical solutions falling within the scope of the claims.

## Claims

1. A transfer apparatus of a battery swap station, used for transferring batteries, comprising:
a foundation, provided with a first matching portion;
a drive mechanism, disposed on the foundation; and
a lifting member, connected to the drive mechanism, wherein the drive mechanism is used for driving the lifting member to ascend and descend, the lifting member is provided with a second matching portion, the second matching portion and the first matching portion are disposed opposite each other in an ascending and descending direction of the lifting member, and the first matching portion and the second matching portion are configured to match together when the lifting member reaches a predetermined position to limit movement of the lifting member in a direction perpendicular to the ascending and descending direction.

2. The transfer apparatus according to claim 1, wherein:
one of the first matching portion and the second matching portion comprises a guide post and the other comprises a sleeve; and
the guide post is configured to insert into the sleeve when the lifting member reaches the predetermined position.

3. The transfer apparatus according to claim 2, wherein:
the sleeve comprises a guide hole, and the guide hole comprises a limiting section; and
the guide post comprises a main body, and the limiting section is used for accommodating at least a portion of the main body, so as to limit the main body.

4. The transfer apparatus according to claim 3, wherein a difference between an aperture of the limiting section and a diameter of the main body is from 0.1 mm to 10 mm.

5. The transfer apparatus according to claim 3 or 4, wherein the guide hole further comprises a guide section, the guide section is located on a side of the limiting section facing toward the lifting member, and an aperture of the guide section is gradually increased in a direction back away from the limiting section.

6. The transfer apparatus according to claim 5, wherein the guide post further comprises a base, one end of the main body is connected to the base, a first buffer member is disposed on a side of the base away from the main body, and a side of the first buffer member away from the base is detachable from the lifting member.

7. The transfer apparatus according to any one of claims 3-6, wherein the guide hole further comprises an accommodating section, the accommodating section is located on a side of the limiting section back away from the guide post, and an aperture of the accommodating section is greater than an aperture of the limiting section.

8. The transfer apparatus according to any one of claims 3-7, wherein a conical head is disposed on a side of the main body facing toward the sleeve.

9. The transfer apparatus according to claim 6, wherein a plurality of long round holes are provided in the first buffer member, and the first buffer member is bolted to the lifting member through the long round holes.

10. The transfer apparatus according to claim 9, wherein at least two first buffer members are provided, and length directions of the long round holes in any two first buffer members are provided at an angle.

11. The transfer apparatus according to claim 6, wherein the guide post further comprises a limiting member disposed in a circumferential direction of the main body, and the limiting member can enter the guide section and abut against the limiting section.

12. The transfer apparatus according to claim 11, wherein the limiting member comprises a reinforcing member disposed in the circumferential direction of the main body and connected to the base, and a sum of a length of the reinforcing member and a diameter of the main body is greater than a diameter of the limiting section in a plane perpendicular to an axial direction of the guide post.

13. The transfer apparatus according to any one of claims 1-12, wherein the lifting member is provided with a first sensor, and the first sensor is used for sensing a relative distance between the lifting member and each battery.

14. The transfer apparatus according to any one of claims 2-12, wherein the foundation is further provided with a second sensor, and the second sensor is used for sensing a distance between the foundation and the guide post.

15. The transfer apparatus according to any one of claims 3-12, wherein a second buffer member is further disposed at a bottom of the guide hole.

16. A battery swap station, comprising:
a parking platform, used for supporting an electrical apparatus;
a battery compartment, used for accommodating batteries and charging the batteries; and
the transfer apparatus according to any one of claims 1-15, configured to move between the battery compartment and the parking platform.
